# EUROPÄISCHE PATENTSCHRIFT

(11) **EP 1 854 319 B1**
(45) Veröffentlichungstag und Bekanntmachung des Hinweises auf die Patenterteilung: **13.08.2008**
(21) Anmeldenummer: 05798656.4
(22) Anmeldetag: 06.10.2005
(51) Int. Cl.: H04Q 7/38

(54) **MOBILTEIL UND BASISSTATION FÜR EIN KOMMUNIKATIONSPROTOKOLL MIT EINER NORMAL-ANMELDUNG UND EINER AD-HOC-ANMELDUNG**
MOBILE STATION AND BASE STATION FOR A COMMUNICATION PROTOCOL COMPRISING A NORMAL LOG-ON AND AN AD-HOC LOG-ON
STATION MOBILE ET STATION DE BASE POUR UN PROTOCOLE DE COMMUNICATION COMPRENANT UNE OUVERTURE DE SESSION NORMALE ET UNE OUVERTURE DE SESSION AD HOC

(30) Priorität: 02.03.2005 DE 102005009504
(43) Veröffentlichungstag der Anmeldung: 14.11.2007
(73) Patentinhaber: Fraunhofer-Gesellschaft zur Förderung der angewandten Forschung e.V., 80686 München (DE)
(72) Erfinder: HUPP, Jürgen, 90425 Nürnberg (DE); TITTEL, Martin, 91301 Forchheim (DE); STURM, Roland, 90491 Nürnberg (DE); MACK, Doris, 90419 Nürnberg (DE)
(74) Vertreter: Zinkler, Franz
(86) Internationale Anmeldenummer: PCT/EP2005/010786
(87) Internationale Veröffentlichungsnummer: WO 2006/092160

(56) Entgegenhaltungen:
- EP-A- 0 849 963
- WO-A-20/04016012
- US-A- 5 642 398
- US-A1- 2003 069 012

## Beschreibung

Die vorliegende Erfindung bezieht sich auf digitale Nachrichtenkommunikationen und insbesondere auf eine Anmeldung eines Mobilteils bei einer Basisstation gemäß einem Kommunikationsprotokoll.

Die Anmeldung eines Endgeräts spielt in allen Kommunikationsprotokollen in digitalen Kommunikationssystemen eine zentrale Rolle. Die Anmeldung findet dabei in einem durch das Kommunikationsprotokoll definierten Anmeldevorgang statt, der üblicherweise selten bzw. einmal, nämlich dann, wenn das Endgerät erstmalig eingesetzt werden soll, durch-geführt wird. Nach dem erfolgreichen Abschluss des Anmeldevorgangs ist das Endgerät in dem digitalen Kommunikationsnetz angemeldet und kann danach beliebig Kommunikationsverbindungen über das Kommunikationsnetz aufbauen. Während des Anmeldevorgangs wird dem Endgerät gemäß dem Kommunikationsprotokoll einem für das digitale Kommunikationssystem eindeutige Identität, z. B. eine Nummer oder Netzadresse, vergeben, anhand der es in Zukunft innerhalb des digitalen Kommunikationssystems erkannt bzw. adressiert werden kann.

In digitalen Funk-Kommunikationssystemen, bei denen das Endgerät, im weiteren Mobilteil genannt, über die Luftschnittstelle durch eine Basisstation mit dem Kommunikationssystem verbunden ist, ist des weiteren die Kontrolle darüber, welches Mobilteil sich anmelden darf, von zentraler Bedeutung. Ohne eine Kontrolle könnte jedes beliebige Mobilteil, das das Kommunikationsprotokoll des digitalen Funk-Kommunikationssystems unterstützt, auch unbefugt angemeldet werden, und hätte damit Zugriff auf das Kommunikationssystem bzw. könnte Verbindungen über das Kommunikationssystem aufbauen. Um das Risiko unbefugter Anmeldungen zu minimieren, werden die Mobilteile in Firmennetzen üblicherweise nicht von den Teilnehmern bzw. Nutzern, sondern zentral von der System-Administration angemeldet.

Bekannte digitale Funk-Kommunikationssysteme sind z.B. GSM, UMTS, DECT, WLAN und Bluetooth.

Im Nachfolgenden wird die Anmeldung und insbesondere der Anmeldevorgang für ein Funk-Kommunikationssystem beispielhaft anhand des DECT-Standards (DECT = Digital Enhanced Cordless Telecommunication) erläutert. Der DECT-Standard definiert eine Funk-Zugangstechnologie, die in privaten, firmen- und öffentlichen Kommunikationssystemen eingesetzt werden kann. Der DECT-Standard unterstützt eine Vielzahl von Anwendungen, angefangen von Sprache und Fax bis zu Datenübertragungen. Der ETSI-DECT-Standard (ETS 300 175, Teil 1-7) beschreibt sowohl die physikalische Schicht, die auch als Physical Layer oder PHL bezeichnet wird, die Medienzugriffscontrollschicht, die auch als Medium Access Control Layer oder kurz MACL bezeichnet wird, die Datenverbindungskontrollschicht, die auch als Data Link Control Layer oder kurz DLCL bezeichnet wird, die Netzwerkschicht, die auch als Network Layer oder kurz NL bezeichnet wird, so wie die Anmeldeprozesse und Sicherheitsmerkmale eines Kommunikationssytems. Innerhalb der Netzwerkschicht ist die Mobility Management (MM)-Einheit für die Anmeldung, die Authentisierung und die Schlüsselvergabe zuständig. Ein DECT-Kommunikationssystem besteht aus zumindest einer Basisstation (Fixed Part: FP) und einem oder mehreren Mobilteilen (Portable Part: PP). Die DECT-Technologie findet vor allem in privaten und Firmen-Kommunikationssystemen eine breite Anwendung.

In privaten DECT-Kommunikationssystemen können typischerweise 1 bis 8 Mobilteile angemeldet und betrieben werden, wobei die Mobilteile intern miteinander kommunizieren können und über die Basisstation mit dem öffentlichen analogen oder ISDN-Netz verbunden sind. In Firmen-DECT-Kommunikationssystemen sind üblicherweise eine Mehrzahl von Basisstationen an die Nebenstellenanlage gekoppelt, wobei über die Mobilteile wie im privaten DECT-Kommunikationssystem interne wie auch externe Kommunikationsverbindungen zum öffentlichen, analogen oder ISDN-Netz möglich sind.

Mobilteile und Basisstationen sind in DECT-Kommunikationssystemen auf einander eingelernt, d.h. im Rahmen eines Anmeldevorgangs (Subscription) tauschen Mobilteil und Basisstation die Identitäten und Schlüssel ("Access-Rights-Request-Process") über Luft aus. Diese werden in nicht-flüchtigen Datenbanken abgespeichert. Basisstation und Mobilteil können nachfolgend miteinander kommunizieren. Der Access-Rights-Request-Process wird nach einer Übersicht über die allgemeine Paketstruktur des DECT-Standards im Folgenden näher beschrieben.

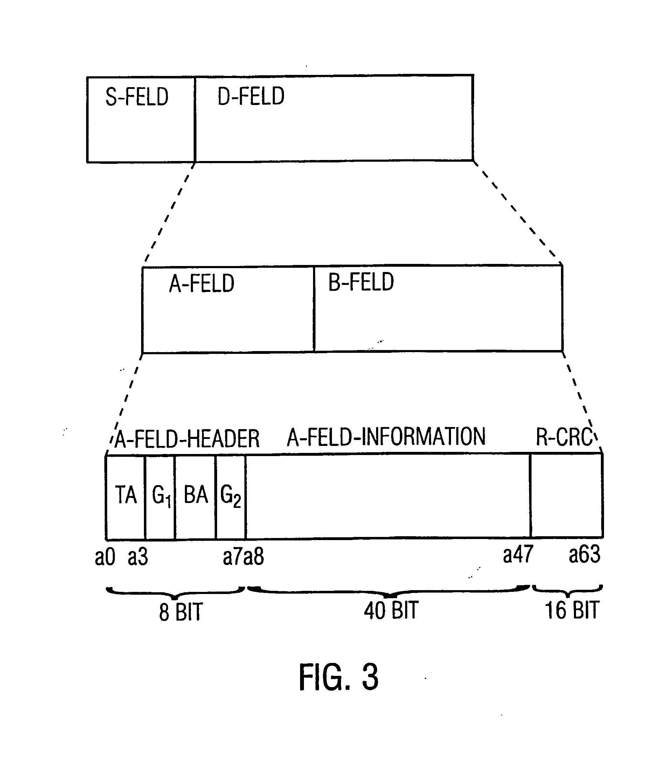

Fig. 3 zeigt die für das Verständnis des Anmeldevorgangs wesentlichen Bestandteile eines DECT-Pakets. Das DECT-Paket besteht aus einem S-Feld, das zur Synchronisation der Kommunikationsverbindung zwischen der Basisstation und dem Mobilteil verwendet wird, und einem D-Feld für Nutzdaten, wobei das DECT-Paket verschiedene Längen haben kann. Das D-Feld unterteilt sich wiederum in ein A-Feld, zur Steuerung der Kommunikation zwischen der Basisstation und dem Mobilteil, und einem B-Feld, das im Allgemeinen die Anwendungsdaten enthält. Das A-Feld wiederum weist einen A-Feld-Header, eine A-Feld-Information und ein R-CRC-Feld für die Sicherung der Steuerdaten auf. Das A-Feld hat eine Feldlänge von 64 Bit, wobei die Bits aufsteigend von a0 für das erste Bit bis a63 für das letzte Bit bezeichnet sind. Der A-Feld-Header umfasst die ersten acht Bit von a0 bis a7, die A-Feld-Information umfasst die Bits a8 bis a47 und das R-CRC-Feld umfasst die Bits a48 bis a63.

Die ersten drei Bits des A-Feld-Headers bilden das TA-Feld, das auch als Tail-Identifier bezeichnet wird und das die Art der A-Feld-Information (a8 .. a47) angibt. Es existieren fünf verschiedene logische Kanäle, von denen jeweils einer Daten im A-Feld überträgt. Einer der logischen Kanäle ist der Kanal Q_{T}, der nur von der Basisstation übertragen wird und Systeminformationen enthält, wie z. B. über die Ausstattung der Feststation oder über die aktuelle Verbindung.

Das Q₁-Bit (a3) und das Q₂-Bit (a7) dienen der Qualitätskontrolle der Übertragung. Das BA-Feld gibt an, welche Beschaffenheit das B-Feld besitzt, z. B. eine geschützte oder ungeschützte Informationsübertragung.

Innerhalb der 40-Bit langen A-Feld-Information, die auch als Tail-Feld bezeichnet wird, ist auch die Übertragung interner MAC-Nachrichten möglich (Anm. wie oben beschrieben gibt es mehrere logische Kanäle für das A-Feld).

Der Access-Rights-Request-Process ermöglicht die Anmeldung eines Mobilteils an eine Basisstation über die Luftschnittstelle. Dazu wird die Basisstation durch z. B. Knopfdruck oder Menüauswahl in eine Anmeldevorgangsbereitschrift versetzt. Während der Anmeldebereitschaft signalisiert die Basisstation allen Mobilteilen durch eine Broadcast-Nachricht, dass eine Anmeldung bei der Basisstation möglich ist.

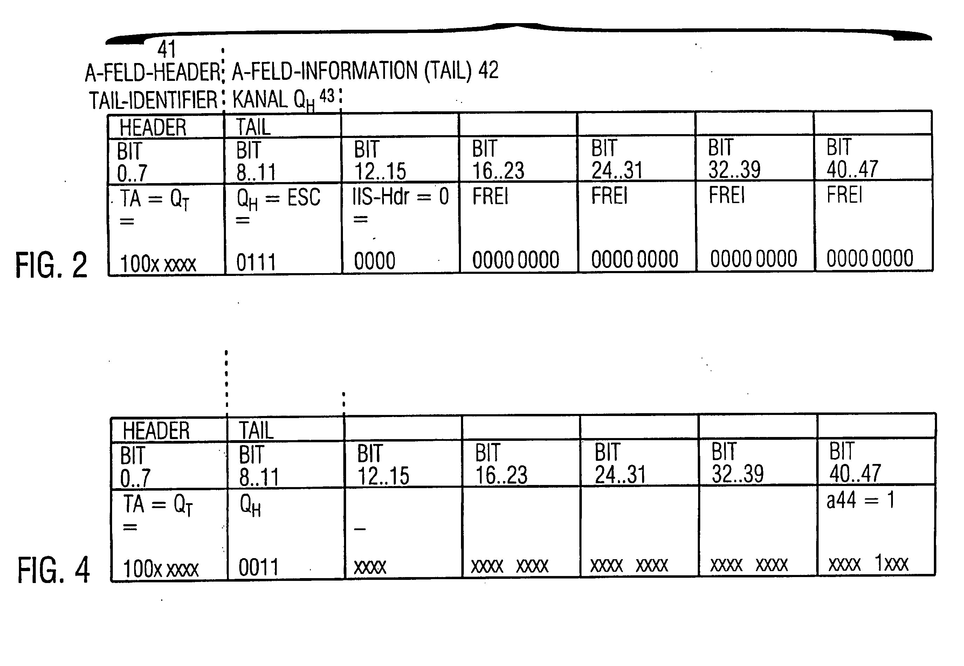

Fig. 4 zeigt die Struktur des A-Feldes ohne R-CRC-Feld und die Spezifika des A-Feldes für die Signalisierung der Anmeldevorgangsbereitschaft der Basisstation. Die Anmeldevorgangsbereitschaft der Basisstation wird über den logischen Kanal Q_{T} signalisiert, der durch den Tail-Identifier-Wert "100" (a0 .. a2) eindeutig definiert wird. Bei einer Q_{T}-Kanal-Nachricht sind die Bits a8 bis a11 als Q-Header definiert, der Q-Header definiert die Art der folgenden A-Feld-Bits a12 bis a47. Ein Q-Header-Wert Q_{H} = "0011" bedeutet, dass die sog. "fixed part capabilities" gesendet werden, wobei der Wert 1 für das Bit a44 die Anmeldevorgangsbereitschaft der Basisstation signalisiert.

Als nächstes wird das Mobilteil ebenfalls in eine Anmeldevorgangsbereitschaft versetzt. Darauf analysiert das Mobilteil die Broadcast-Nachricht der Basisstation auf das Bit a44, erkennt sie die Anmeldevorgangsbereitschaft der Basisstation an dem Bit-Wert 1 für das Bit a44, so startet das Mobilteil den weiteren Anmeldevorgang mit einer Access-Rights-Request-Nachricht. Die Access-Rights-Request-Nachricht enthält die Identität des Mobilteils sowie optional weitere Informationen, die z. B. die Art der Authentisierung und der Verschlüsselung der Kommunikationsverbindungen definieren. Nach Empfang der Access-Rights-Request-Nachricht verarbeitet die Basisstation die darin enthaltenen Informationen und antwortet dem Mobilteil mit einer Access-Rights-Accept-Nachricht, wenn sie die von dem Mobilteil vorgegebene Art der Authentisierung und Verschlüsselung unterstützt. Die Access-Rights-Accept-Nachricht der Basisstation enthält die Identität des Mobilteils, die Identität der Basisstation sowie die von dem Mobilteil vorgegebene Art der Authentisierung und der Verschlüsselung der Kommunikationsverbindung. Nach Erhalt der Access-rights-Accept-Nachricht speichert das Mobilteil die eigene Identität, die Identität der Basisstation und die mit der Basisstation vereinbarte Art der Authentisierung und Verschlüsselung als einen Datensatz für die Anmeldung des Mobilteils bei dieser Basisstation. Des gleichen speichert die Basisstation die Identität des Mobilteils und die mit dem Mobilteil vereinbarte Art der Authentisierung und Verschlüsselung der Kommunikationsverbindung als einen Datensatz.

Damit ist der zukünftige Schlüssel UAK (User Authentication Key) für die Authentisierung des Mobilteils gegenüber der Basisstation noch nicht definiert, sondern nur die Art der Authentisierung. Für die erstmalige Zuteilung des UAK, der danach für die gegenseitige Authentisierung der Basisstation durch das Mobilteil und der Basisstation durch das Mobilteil herangezogen wird, wird der UAK einmalig über einen Über-die-Luft-Zuteilungsprozess ausgetauscht. Dieser Prozess wird durch die Basisstation in Form einer Key-Allocate-Nachricht an das Mobilteil initiiert, wobei die Nachricht die Art der Authentisierung und den Authentisierungs-Code, der auch als Authentication Code (AC) bezeichnet wird, enthält. Nach Erhalt der Key-Allocate-Nachricht durch das Mobilteil wird üblicherweise der Nutzer des Mobilteils aufgefordert, den Authentisierungs-Code ähnlich wie einen PIN (Personal Identification Number) über die Tastatur einzugeben. Das Mobilteil sendet den vom Nutzer eingegebenen Authentisierungs-Code mittels einer Authenticate-Request-Nachricht an die Basisstation. Parallel dazu authentisieren sich das Mobilteil und die Basisstation auf Basis des Authentisierungs-Codes gegenseitig und berechnen auf Basis des DECT-Standard-Authentisierungs-Algorithmus (DSSA) anhand einer von dem Mobilteil vorgegebenen Zufallszahl und dem Authentisierungs-Code den UAK. Stimmt der vom Nutzer eingegebene Authentisierungs-Code mit dem bei der Basisstation hinterlegten Authentisierungs-Code überein, so gilt der UAK als zwischen Mobilteil und Basisstation vereinbart und wird in Zukunft für die gegenseitige Authentisierung z. B. bei einem Verbindungsaufbau herangezogen.

Der UAK wird sowohl von dem Mobilteil wie auch von der Basisstation zusammen mit der Identität des Mobilteils, der Identität der Basisstation sowie der Art der Authentisierung und der Verschlüsselung der Kommunikationsverbindung abgespeichert, wobei der Abspeichervorgang die Systemkonfiguration verändert.

Zusammenfassend kann gesagt werden, dass der Anmeldevorgang gemäß dem Access-Rights-Request-Process auf beiden Seiten gestartet werden muss. Dabei strahlt die Basisstation eine bestimmte Signalisierung aus (Bit a44 in einer Broadcast-Nachricht). Daran erkennt das Mobilteil eine anmeldebereite Basisstation und initiiert den Anmeldevorgang.

Der beschriebene Anmeldevorgang mit der Über-die-Luft-Zuteilung des UAK ist insbesondere bei privaten DECT-Kommunikationssystemen weit verbreitet, da der Anmeldevorgang einfach durchzuführen ist, gleichzeitig aber auch ein hohes Maß an Sicherheit bietet, da das Zeitfenster für den Anmeldevorgang auf typischerweise 1 Minute begrenzt ist und der Authentisierungs-Code nur dem Nutzer bzw. Besitzer bekannt ist.

Firmen und insbesondere großen Firmen dagegen bietet der Anmeldevorgang mit Über-die-Luft-Zuteilung des UAK im Allgemeinen zu wenig Schutz vor Missbrauch durch Mitarbeiter oder Firmenfremde. Deshalb erfolgt der Anmeldevorgang in Firmen üblicherweise zentral durch die System-Administration und insbesondere durch Mobilteile mit einem DECT-Access-Module (DAM), das ähnlich einer GSM-SIM-Karte vorkonfiguriert und mit einem entsprechenden UAK belegt werden kann, so dass die unsichere Eingabe und Über-die-Luft-Zuteilung durch einen Authentisierungs-Code entfällt.
Damit ist maximale Sicherheit gewährleistet. Die Basisstation für den Firmeneinsatz sehen daher im Allgemeinen auch z.B. keinen Knopf für die Aktivierung der Anmeldevorgangsbereitschaft der Basisstation vor.

Nachteilig an der zuvor besprochenen Lösung für Firmen, entweder eine zentrale Anmeldung und insbesondere eine Anmeldung über das DECT-Access-Module, ist die fehlende Flexibilität aufgrund der zentralen Anmeldung. Eine zentrale Anmeldung durch die System-Administration bedeutet, dass jedes Mobilteil nur von einem System-Administrator angemeldet werden kann. Reist aber z. B. ein Mitarbeiter einer Firma von einem Standort A zu einem Standort B und möchte dort sein Mobilteil nutzen, muss er zuerst zu der System-Administration gehen, dazu eventuell einmal das gesamte Firmengelände durchqueren, darauf hoffen, dass ein kompetenter System-Administrator anwesend ist und auch gerade Zeit hat, um die Anmeldung durchzuführen. Eine andere Möglichkeit besteht darin dass der Mitarbeiter zwei Mobilteile, eines für den Standort A und ein anderes für den Standort B mit sich führen muss, was wiederum für den Mitarbeiter zusätzlichen Ballast bedeutet und immer das Risiko besteht, dass er gerade das falsche Mobilteil dabei hat. Alle aufgeführten Lösungen sind im Firmenalltag unpraktikabel und uneffizient.

Die WO 2004/016012 A1 beschreibt eine Steuerung für Broadcast-Dienste in schnurlosen Kommunikationsnetzen. Dabei beschränkt das schnurlose Kommunikationsnetz Dienstbereiche innerhalb des Netzes, in dem es Registrierungsmarkierungsinformationen in jeder der Mehrzahl von Dienstbereichen aussendet. Die Markierungsinformation zeigt an, ob eine Registrierung für einen gegebenen Broadcast-Dienst aktuell für mobile Geräte nötig ist, die Zugriff zu diesem Broadcast-Dienst wünschen. Damit wird die gesendete Markierungsinformation genutzt, um zu solchen Registrierungen aufzufordern und erlaubt dem Netz einen oder mehrere Broadcast-Dienste zu deaktivieren, wenn beispielsweise keine Antworten auf diese Registrierungsanforderungen zeitgerecht bei der Basisstation eingehen.

Die US 5 642 398 A beschreibt ein Verfahren für eine Registrierung von mobilen Kommunikationsgeräten. Dabei kann die Registrierung beim Ein- oder Ausschalten des Kommunikationsgerätes erfolgen, aufgrund einer abgelaufenen Zeitspanne, einer zurückgelegten Distanz oder auf der Basis des Eintritts in eine Zone, in der das mobile Kommunikationsgerät zuvor nicht registriert war. Zudem kann eine Registrierung auch von einer Basisstation initiiert werden oder durch Parameteränderungen in dem mobilen Kommunikationsgerät. Dabei kann ein mobiles Kommunikationsgerät auf der Basis einer Registrierungsinformationsliste (RIL), die in dem mobilen Kommunikationsgerät gespeichert ist, zusammen mit einer Registrierungskonfigurationsinformation, die von den Basisstationen gesendet werden, bestimmen, wann es sich registrieren soll.

Die Aufgabe der vorliegenden Erfindung besteht darin, ein praktikables und effizientes Konzept für die mögliche Integration eines Mobilteils in verschiedenen und voneinander getrennten Netzen zu schaffen.

Diese Aufgabe wird durch ein Mobilteil nach Patentanspruch 1, durch eine Basisstation nach Patentanspruch 8, durch ein Verfahren zum Betreiben eines Mobilteils nach Patentanspruch 15, durch ein Verfahren zum Betreiben einer Basisstation nach Patentanspruch 16 und durch ein Computerprogramm gemäß Patentanspruch 17 gelöst.

Der vorliegenden Erfindung liegt die Erkenntnis zugrunde, dass eine unterschiedliche Signalisierung der Basisstation für die Bereitschaft für einen Normal-Anmeldevorgang und für die Bereitschaft für einen Ad-hoc-Anmeldevorgang eine Unterscheidung der Anmeldeinformationen für einen Normal-Anmeldevorgang und der Anmeldeinformationen für einen Ad-hoc-Anmeldevorgang ermöglicht. Erfindungsgemäß wird daher eine Basisstation zum Kommunizieren mit einem Mobilteil geschaffen, die eine Signalisierung einer Bereitschaft der Basisstation für einen Normal-Anmeldevorgang und eine davon unterschiedliche Signalisierung einer Bereitschaft der Basisstation für einen Ad-hoc-Anmeldevorgang erzeugen und versenden kann, sowie ein Mobilteil zum Kommunizieren einer Basisstation, das eine Signalisierung einer Bereitschaft der Basisstation für einen Normal-Anmeldevorgang und eine davon verschiedene Nachricht für eine Signalisierung einer Bereitschaft für einen Ad-hoc-Anmeldevorgang empfangen und interpretieren kann und den Ad-hoc-Anmeldevorgang starten kann. Die erfindungsgemäße, unterschiedliche Signalisierung ermöglicht eine unterschiedliche Bearbeitung der Anmeldeinformationen.

Ein bevorzugtes Ausführungsbeispiel für ein Mobilteil oder eine Basisstation zeichnet sich insbesondere dadurch aus, dass die Anmeldeinformationen für eine Ad-hoc-Anmeldung nicht wie die Anmeldeinformationen für eine Normal-Anmeldung in der Systemkonfiguration, sondern in einem separaten Speicher gespeichert werden. Dies hat den Vorteil, dass die Anmeldeinformationen für den Ad-hoc-Anmeldungsvorgang sehr einfach von den Anmeldeinformationen für den Normal-Anmeldevorgang unterschieden werden können, um sie z. B. getrennt anzuzeigen, zu analysieren oder in nachgelagerten Prozessen weiterverarbeiten z.B. im Falle einer unbefugten Anmeldung einfach zu erkennen und sofort löschen zu können.

Ein weiteres bevorzugtes Ausführungsbeispiel der vorliegenden Erfindung weist einen zweiten, flüchtigen Speicher für die Speicherung der Anmeldeinformationen für den Ad-hoc-Anmeldevorgang auf, dies hat den Vorteil, dass beim Ausschalten des Mobilteils oder der Basisstation die Anmeldeinformationen für den Ad-hoc-Anmeldevorgang automatisch gelöscht werden.

Bevorzugte Ausführungsbeispiele der vorliegenden Erfindung einer Basisstation oder eines Mobilteils zeichnen sich insbesondere dadurch aus, dass das zum Kommunizieren eingesetzte Kommunikationsprotokoll für die Signalisierung der Anmeldebereitschaft der Basisstation für einen Ad-hoc-Anmelde-Vorgang einen durch das Kommunikationsprotokoll definierten Escape-Code nutzt, wobei der Escape-Code auf eine nicht durch das Kommunikationsprotokoll definierte Anwendung hinweist. Dies hat den Vorteil, dass bei anderen Mobilteilen oder Basisstationen, die gemäß dem gleichen Kommunikationsprotokoll kommunizieren, diese Signalisierung verwerfen. Damit können sowohl Mobilteile ohne Ad-hoc-Anmeldung an einer Basisstation mit Ad-hoc-Anmeldung sowie Mobilteile mit Ad-hoc-Anmeldung an normalen Basisstationen ohne Ad-hoc-Anmeldung normal betrieben werden.

Des weiteren sind bevorzugte Ausführungsbeispiele der vorliegenden Erfindung ausgebildet, dass das Mobilteil, wie auch die Basisstation für den Ad-hoc-Anmeldevorgang die gleiche Kommunikation mit der Basisstation bzw. dem Mobilteil wie in dem Normal-Anmeldevorgang führen. Dies hat den wichtigen Vorteil, dass die Anpassung für die Einführung der Ad-hoc-Anmeldung minimal ist, da nur ein minimaler Anpassungsaufwand in der Entwicklung bzw. dadurch auch ein minimaler Testaufwand notwendig ist, und somit auch zwischen verschiedenen Herstellern eine Interoperabilität sehr einfach hergestellt werden kann.

Ein bevorzugtes Ausführungsbeispiel der vorliegenden Erfindung zeichnet sich insbesondere dadurch aus, dass es als Kommunikationsprotokoll den ETSI-DECT-Standard ETS 300 175 einsetzt. Das hat den Vorteil, dass ein normaler sog. "Access-Rights-Request-Process" wie bei einem Normal-Anmeldevorgang stattfindet, und damit die für eine Authentisierung und für eine Verschlüsselung der Kommunikationsverbindung notwendigen Schlüssel generiert werden. Die Ad-hoc-Anmeldevorgangsbereitschaft wird über eine proprietäre Broadcast-Nachricht signalisiert. Eine Signalisierung über Bit a44 im Q-Feld wie bei einem Normal-Anmeldevorgang ist nachteilhaft, da ansonsten normale/andere Mobilteile einen Normal-Anmeldevorgang versuchen könnten.

Die Sicherheit ist gewährleistet, da
1. die Identität durch Authenticate-Request überprüft wird (wie bei einem Normal-Anmeldevorgang). Hier ist die Abfrage eines Codes möglich.
2. Die Ad-hoc-Anmeldevorgangsbereitschaft bei der Basisstation und dem Mobilteil aktiv sein muss und
3. Ein Zeitfenster für den Ad-hoc-Anmeldevorgang existiert.

Des Weiteren zeichnen sich bevorzugte Ausführungsbeispiele der vorliegenden Erfindung insbesondere dadurch aus, dass die Ad-hoc-Anmeldung des Mobilteils nicht nur per Befehl, sondern z. B. auch per Zeitbegrenzung automatisch beendet werden kann. Dies hat den Vorteil, dass kein Eingreifen eines System-Administrators notwendig ist, um die Anmeldung zu löschen.

Zusammenfassend bietet die vorliegende Erfindung durch die Einführung eines Ad-hoc-Anmeldevorgangs und der unterschiedlichen Signalisierung für den Ad-hoc-Anmeldevorgang, eine Ad-hoc-Anmeldung, die für den Mitarbeiter als Nutzer einfach zu bedienen ist und nicht erfordert, mehrere Mobilteile gleichzeitig mit sich zu führen. Ferner kann aber auch das Risiko des Missbrauchs für die Firma sowie der Aufwand für die System-Administration auf ein Minimum reduziert werden. So kann sich z. B. ein Mitarbeiter, der normalerweise nicht in der Flugzeugabfertigung arbeitet und dessen Mobilteil deshalb dort an der Basisstation nicht angemeldet ist, bei Bedarf spontan über den Ad-hoc-Anmeldevorgang einfach anmelden und an einer Konferenzschaltung der Flugzeugabfertigungs-Service-Gruppe teilnehmen. Dadurch wird die Systemkonfiguration nicht geändert, das heißt, z. B. auch, dass die konfigurierten Benutzergruppen gleich bleiben. Die Ad-hoc-Anmeldeinformationen können des weiteren dabei z. B. automatisch nach einer Stunde gelöscht werden, so dass gewährleistet ist, dass das Kommunikationssystem nur Normal-Anmeldungen dauerhaft speichert, und das Kommunikationssystem von einem Wildwuchs von "temporären" Anmeldungen, die sich über die Zeit mehren und die Systempflege erheblich erschweren, verschont bleibt. Dies ist im Gegensatz zum Stand der Technik aufgrund der unterschiedlichen Signalisierungen und der unterschiedlichen Speicherung der Ad-hoc-Anmeldeinformationen und der Normal-Anmeldeinformationen einfach zu realisieren.

Bevorzugte Ausführungsbeispiele der vorliegenden Erfindung werden nachfolgend bezugnehmend auf die beiliegenden Zeichnungen detaillierter erläutert. Es zeigen:
- Fig. 1A: ein prinzipielles Blockschaltbild eines Ausführungsbeispiels eines Mobilteils zum Kommunizieren mit einer Basisstation gemäß der vorliegenden Erfindung;
- Fig. 1B: ein prinzipielles Blockschaltbild eines Ausführungsbeispiels einer Basisstation zum Kommunizieren mit einem Mobilteil gemäß der vorliegenden Erfindung;
- Fig. 2: das A-Feld (ohne R-CRC) zur Signalisierung der Ad-hoc-Anmeldevorgangsbereitschaft der Basisstation eines bevorzugten Ausführungsbeispiels der vorliegenden Erfindung gemäß ETSI-DECT-Standard;
- Fig. 3: die Paketstruktur gemäß ETSI-DECT-Standard; und
- Fig. 4: das A-Feld (ohne R-CRC) zur Signalisierung der Normal-Anmeldevorgangsbereitschaft der Basisstation gemäß ETSI-DECT-Standard.

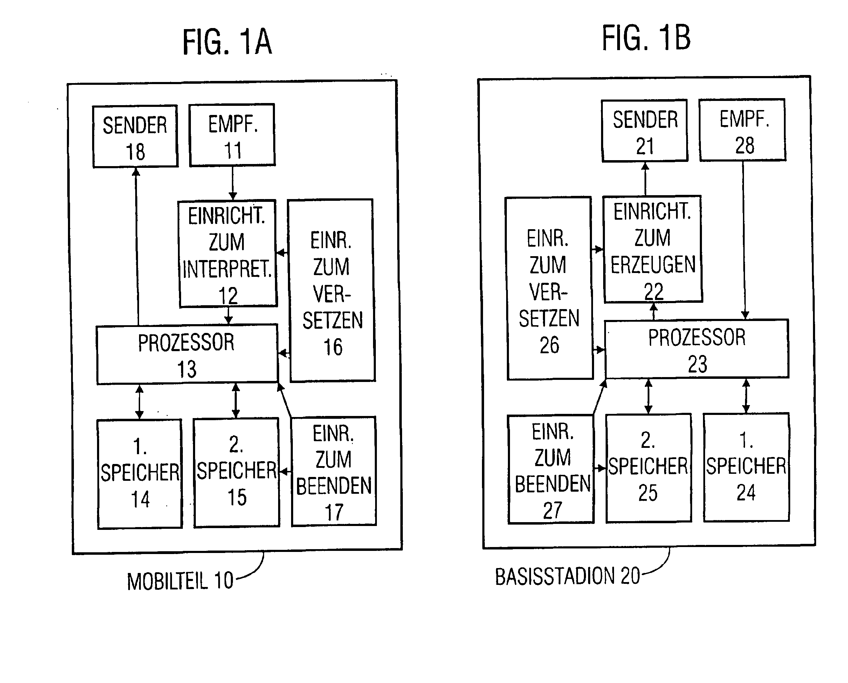

Fig. 1A zeigt ein Blockschaltbild eines erfindungsgemäßen Mobilteils 10 für die Kommunikation mit einer Basisstation gemäß einem Kommunikationsprotokoll, das einen Empfänger 11 aufweist, der ausgebildet ist, um eine Nachricht des Kommunikationsprotokolls von einer Basisstation zu empfangen und die Nachricht an die Einrichtung 12 zum Interpretieren weiterleitet. Die Einrichtung 12 zum Interpretieren der Nachricht basierend auf dem Kommunikationsprotokoll ist ausgebildet, um die Signalisierung der Bereitschaft der Basisstation für den Normal-Anmeldevorgang von der Signalisierung der Bereitschaft der Basisstation für einen Ad-hoc-Anmeldevorgang zu unterscheiden und dem Prozessor 13 die Bereitschaft der Basisstation für einen Ad-hoc-Anmeldevorgang zu signalisieren. Der Prozessor 13 wiederum ist ausgebildet, wenn die Bereitschaft der Basisstation für einen Ad-hoc-Anmeldevorgang signalisiert wird, einen Ad-hoc-Anmeldevorgang mit der Basisstation durchzuführen.

Selbstverständlich kann die Einrichtung 12 auch mit dem Prozessor 13 integriert sein, wobei in diesem Fall jedoch die gleichen Funktionalitäten verbleiben.

Darüber hinaus wird in dem Prozessor die übliche Funktion des Umsetzens von Sprachsignalen oder Datensignalen in sendefähige Signale sowie die durch das Kommunikationsprotokoll definierten Prozeduren durchgeführt.

Ein bevorzugtes Ausführungsbeispiel des erfindungsgemäßen Mobilteils 10 weist ferner einen ersten Speicher 14 für eine Speicherung einer Normal-Anmeldeinformation für den Normal-Anmeldevorgang und einen zweiten Speicher 15 für eine Speicherung einer Ad-hoc-Anmeldeinformation für den Ad-hoc-Anmeldevorgang auf. Der erste Speicher 14 und der zweite Speicher 15 sind so ausgebildet, dass der Prozessor 13 lesenden und schreibenden Zugriff auf die darin enthaltenen Informationen hat.

Je nach Ausführungsbeispiel kann der zweite Speicher 15 ein flüchtiger Speicher sein.

Ein bevorzugtes Ausführungsbeispiel weist des weiteren eine Einrichtung 16 zum Versetzen des Mobilteils 10 in eine Ad-hoc-Anmeldevorgangsbereitschaft auf, die ausgebildet ist, insbesondere die Einrichtung 12 zum Interpretieren und den Prozessor 13 für einen Ad-hoc-Anmeldevorgang zu aktivieren. Je nach Ausführungsbeispiel kann die Einrichtung 16 zum Versetzen ausgebildet sein, das Mobilteil durch z. B. die Eingabe eines Nutzers des Mobilteils, abhängig von einem externen Ereignis oder periodisch in die Ad-hoc-Anmeldevorgangsbereitschaft zu versetzen.

Ein Ausführungsbeispiel des erfindungsgemäßen Mobilteils kann weiterhin eine Einrichtung 17 zum Beenden einer Ad-hoc-Anmeldung aufweisen, wobei die Einrichtung 17 zum Beenden je nach Ausführungsbeispiel ausgebildet sein kann, per Eingabe durch einen Nutzer des Mobilteils, per Zeitbegrenzung oder durch Ausschalten des Mobilteils die Ad-hoc-Anmeldung zu beenden. Dazu kann die Einrichtung 17 zum Beenden zum Beispiel über den Prozessor einen Ad-hoc-Abmeldevorgang einleiten oder die Ad-hoc-Anmeldeinformation direkt in dem zweiten Speicher 15 löschen.

Je nach Ausführung ist die Einrichtung 12 zum Interpretieren ausgebildet, in einer über den Empfänger 11 empfangenen Nachricht nach einem durch das Kommunikationsprotokoll definierten Escape-Code zu suchen, wobei der Escape-Code auf eine nicht durch das Kommunikationsprotokoll definierte Anwendung hinweist, bei Erkennen des Escape-Codes einen folgenden Bereich des Datenstroms auszuwerten und im Falle des Erkennens einer vorgegebenen Belegung des weiteren Bereichs den Prozessor zu aktivieren, dass er den Ad-hoc-Anmeldevorgang startet. In einem speziellen Ausführungsbeispiel aktiviert die Einrichtung 12 zum Interpretieren den Prozessor bereits, wenn sie den Escape-Code erkannt hat.

Bei einem weiteren Ausführungsbeispiel des erfindungsgemäßen Mobilteils ist der Prozessor ausgebildet, um in dem Ad-hoc-Anmeldevorgang eine gleiche Kommunikation mit der Basisstation zu führen wie in dem Normal-Anmeldevorgang. Ein bevorzugtes Ausführungsbeispiel nutzt als Kommunikationsprotokoll den ETSI-DECT-Standard ETS 300 175 und für den Ad-hoc-Anmeldevorgang den Access-Rights-Request-Process wie für den Normal-Anmeldevorgang.

Ausführungsbeispiele für das Mobilteil enthalten weiterhin einen Sender 18 für die Kommunikation mit der Basisstation.

Fig. 1B zeigt eine erfindungsgemäße Basisstation, die einen Prozessor 23 für die Durchführung des Ad-hoc-Anmeldevorgangs, eine Einrichtung 22 zum Erzeugen, die ausgebildet ist, als Nachricht die erste oder zweite Nachricht zu erzeugen, wobei die erste Nachricht und die zweite Nachricht unterschiedlich voneinander sind, und einem Sender 21, der die Nachricht für eine Signalisierung einer Bereitschaft einer Basisstation für einen Ad-hoc-Anmeldevorgang der Einrichtung 22 zum Erzeugen versendet.

Selbstverständlich kann die Einrichtung 22 auch mit dem Prozessor 23 integriert sein, wobei in diesem Fall jedoch die gleichen Funktionalitäten verbleiben.

Ein bevorzugtes Ausführungsbeispiel der erfindungsgemäßen Basisstation weist ferner einen ersten Speicher 24 für eine Speicherung einer Normal-Anmeldeinformation für den Normal-Anmeldevorgang und einen zweiten Speicher für eine Speicherung einer Ad-hoc-Anmeldeinformation für den Ad-hoc-Anmeldevorgang auf. Der erste Speicher 24 und der zweite Speicher 25 sind so ausgebildet, dass der Prozessor lesenden und schreibenden Zugriff hat.

Je nach Ausführungsbeispiel kann der zweite Speicher 25 für den Ad-hoc-Anmeldevorgang ein flüchtiger Speicher sein.

Ein weiteres Ausführungsbeispiel der erfindungsgemäßen Basisstation weist eine Einrichtung 26 zum Versetzen der Basisstation in die Ad-hoc-Anmeldevorgangsbereitschaft auf, die die Einrichtung 22 zum Erzeugen und den Prozessor 23 derart steuert, dass die Einrichtung 22 zum Erzeugen nur dann die zweite Nachricht für eine Signalisierung der Ad-hoc-Anmeldevorgangsbereitschaft erzeugt, und der Prozessor nur dann einen Ad-hoc-Anmeldevorgang startet, wenn sie durch die Einrichtung 26 zum Versetzen dafür aktiviert sind. Je nach Ausführungsbeispiel ist die Einrichtung 26 zum Versetzen ausgebildet, durch Eingabe eins Nutzers der Basisstation, periodisch oder abhängig von einem vorgegebenen externen Ereignis, die Basisstation in die Ad-hoc-Anmeldevorgangsbereitschaft zu versetzen.

Weitere Ausführungsbeispiele der erfindungsgemäßen Basisstation weisen eine Einrichtung 27 zum Beenden einer Ad-hoc-Anmeldung des Mobilteils auf, wobei die Einrichtung 27 zum Beenden ausgebildet ist, durch Eingabe eines Nutzers der Basisstation, aufgrund eines vorgegebenen externen Ereignisses, per Zeitbegrenzung oder durch Ausschalten der Basisstation, die Ad-hoc-Anmeldung zu beenden. Wobei je nach Ausführungsbeispiel die Einrichtung 27 zum Beenden z. B. über den Prozessor 23 einen Ad-hoc-Abmeldevorgang startet oder direkt die Ad-hoc-Anmeldeinformationen im zweiten Speicher 25 löscht.

Weitere Ausführungsbeispiele der erfindungsgemäßen Basisstation sind ferner ausgebildet, für die zweite Nachricht einen durch das Kommunikationsprotokoll definierten Escape-Code einzusetzen, wobei der Escape-Code auf eine nicht durch das Kommunikationsprotokoll definierte Anwendung hinweist und dass die zweite Nachricht so erzeugt werden kann, dass ein dem Escape-Code folgender Bereich eine vorgegebene, eindeutige Belegung aufweist.

Je nach Ausführungsbeispiel ist der Prozessor ausgebildet, um in dem Ad-hoc-Anmeldevorgang eine gleiche Kommunikation mit dem Mobilteil zu führen wie in dem Normal-Anmeldevorgang.

Weitere Ausführungsbeispiele setzen den ETSI-DECT-Standard ETS 300 175 als Kommunikationsprotokoll ein und nutzen ferner für den Ad-hoc-Anmeldevorgang den gleichen Access-Rights-Request-Process wie für den Normal-Anmeldevorgang.

Weitere Ausführungsbeispiele der Basisstation weisen einen Empfänger 28 für die Kommunikation mit dem Mobilteil auf.

Ein bevorzugtes Ausführungsbeispiel einer erfindungsgemäßen Basisstation und eines erfindungsgemäßen Mobilteils, die den ETSI-DECT-Standard als Kommunikationsprotokoll einsetzen, wird im Folgenden näher beschrieben.

Die Basisstation versendet eine spezielle, proprietäre Signalisierung, um die Ad-hoc-Anmeldevorgangsbereitschaft zu kennzeichnen. Proprietäre Felder werden bei anderen DECT-Systemen verworfen. Andere eingelernte Mobilteile ohne Ad-hoc-Modus ignorieren diese Nachricht, können jedoch normal betrieben werden.

Fig. 2 zeigt das A-Feld (ohne R-CRC) 40 einer beispielhaften Signalisierung im MAC-Layer. Das A-Feld 40 weist wie in Fig. 3 beschrieben einen A-Feld-Header 41, der auch als Tail-Header bezeichnet wird, und die A-Feld-Information 42, die auch als Tail bezeichnet wird, auf, deren erste vier Bits a8 bis a11 den Q-Kanal definieren.

Die Signalisierung erfolgt in einem logische Kanal, der Systeminformationen verteilt (Tail-Identifier TA = 100 also Q_{T}-Kanal). Der besondere Kanal Q_{H} = 7, der durch den Escape-Code "0111" signalisiert wird, steht für anwendungsspezifische, proprietäre Informationen zur Verfügung. Die im weiteren Tail folgendende proprietäre Nachricht beinhaltet eine besondere Kennung (IIS-Hdr), die die Ad-hoc-Anmeldevorgangsbereitschaft kennzeichnet. Die Bits a16 bis a47 sind frei definierbar, in diesem Beispiel alle mit dem Wert 0 versehen.

Während der Synchronisation sucht das Mobilteil nur Basisstationen in Ad-hoc-Anmeldevorgangsbereitschaft durch Auswertung der proprietären Signalisierung. Findet ein Mobilteil in Ad-hoc-Anmeldevorgangsbereitschaft eine Basisstation in Ad-hoc-Anmeldevorgangsbereitschaft, werden wie bei einem regulären Anmeldevorgang die Identitäten und Schlüssel ausgetauscht und temporär gespeichert. Danach können die Basisstation und das Mobilteil beliebig Verbindung aufund abbauen.

Die Ad-hoc-Anmeldung kann per Befehl, per Zeitbegrenzung oder durch Ausschalten der Module beendet werden. Die temporären Zugangsdaten werden gelöscht, ein nachfolgender Verbindungsaufbau würde abgelehnt werden. Damit kann ein Mobilteil durch eine Ad-hoc-Anmeldung temporär mit einer Basisstation in Verbindung treten, ohne die Systemkonfiguration zu ändern.

## Patentansprüche

1. Mobilteil (10) zum Kommunizieren mit einer Basisstation gemäß einem Kommunikationsprotokoll, wobei das Kommunikationsprotokoll eine erste Nachricht für eine Signalisierung einer Bereitschaft der Basisstation für einen Normal-Anmeldevorgang des Mobilteils (10) bei der Basisstation und eine zweite Nachricht für eine Signalisierung einer Bereitschaft der Basisstation für einen Ad-hoc-Anmeldevorgang des Mobilteils (10) bei der Basisstation aufweist, mit folgenden Merkmalen:
einen Empfänger (11), der ausgebildet ist, um eine Nachricht des Kommunikationsprotokolls von einer Basisstation zu empfangen;
eine Einrichtung (12) zum Interpretieren der Nachricht, basierend auf dem Kommunikationsprotokoll, wobei die Einrichtung (12) zum Interpretieren ausgebildet ist, um die Signalisierung der Bereitschaft der Basisstation für den Normal-Anmeldevorgang von der Signalisierung der Bereitschaft der Basisstation für einen Ad-hoc-Anmeldevorgang zu unterscheiden;
einen Prozessor (13), der ausgebildet ist, um dann, wenn die Bereitschaft der Basisstation für einen Ad-hoc-Anmeldevorgang signalisiert wird, einen Ad-hoc-Anmeldevorgang mit der Basisstation durchzuführen;
einem ersten Speicher (14) für eine Speicherung einer Systemkonfiguration, die Normal-Anmeldeinformationen für den Normaleanmeldevorgang umfasst, und einem von dem ersten Speicher (14) separaten zweiten Speicher (15) für eine Speicherung einer Ad-hoc-Anmeldeinformation für den Ad-hoc-Anmeldevorgang; und
einer Einrichtung (17) zum Beenden einer Ad-hoc-Anmeldung des Mobilteils (10), wobei die Einrichtung (17) zum Beenden ausgebildet ist, per Befehl, per Zeitbegrenzung oder durch Ausschalten des Mobilteils die Ad-hoc-Anmeldung zu beenden und die Ad-hoc-Anmeldeinformation in dem zweiten Speicher (15) zu löschen.

2. Mobilteil (10) nach Anspruch 1, bei dem der zweite Speicher (15) für den Ad-hoc-Anmeldevorgang ein flüchtiger Speicher ist und der erste Speicher (14) ein nicht-flüchtiger Speicher ist.

3. Mobilteil (10) nach einem der Ansprüche 1 bis 2, bei dem die Einrichtung (12) zum Interpretieren ausgebildet ist, in einer empfangenen Nachricht, nach einem durch das Kommunikationsprotokoll definierten Escape-Code zu suchen, wobei der Escape-Code auf eine nicht durch das Kommunikationsprotokoll definierte Anwendung hinweist.

4. Mobilteil (10) nach Anspruch 3, bei dem die Einrichtung 12 zur Interpretation ausgebildet ist, um die Nachricht so zu interpretieren, dass bei Erkennen des Escape-Codes ein folgender Bereich des Datenstroms ausgewertet wird, und im Falle einer vorgegeben Belegung des folgenden Bereichs den Prozessor zu aktivieren, dass er den Ad-hoc-Anmeldevorgang startet, oder um den Prozessor (13) bereits dann zu aktivieren, um den Ad-hoc-Anmeldevorgang zu starten, wenn die Nachricht den Escape-Code aufweist.

5. Mobilteil (10) nach einem der Ansprüche 1 bis 4, bei dem der Prozessor (13) ausgebildet ist, um in dem Ad-hoc-Anmeldevorgang eine gleiche Kommunikation mit der Basisstation zu führen, wie in dem Normal-Anmeldevorgang.

6. Mobilteil (10) nach Anspruch 1, das ferner folgende Merkmale aufweist, eine Einrichtung (16) zum Versetzen des Mobilteils in die Ad-hoc-Anmeldevorgangsbereitschaft, wobei die Einrichtung (12) zum Interpretieren oder der Prozessor (13) ausgelegt sind, um nur dann für einen Ad-hoc-Anmeldevorgang aktiv zu sein, wenn die Einrichtung (16) zum Versetzen die Ad-hoc-Anmeldevorgangsbereitschaft signalisiert.

7. Mobilteil (10) nach Anspruch 6, bei der die Einrichtung (16) zum Versetzen ausgebildet ist, um das Mobilteil (10) periodisch oder abhängig von einem externen Ereignis in die Ad-hoc-Anmeldevorgangsbereitschaft zu versetzen.

8. Basisstation (20) zum Kommunizieren mit einem Mobilteil gemäß einem Kommunikationsprotokoll, wobei das Kommunikationsprotokoll eine erste Nachricht für eine Signalisierung einer Bereitschaft der Basisstation für einen Normal-Anmeldevorgang des Mobilteils bei der Basisstation (20) und eine zweite Nachricht für einen Signalisierung einer Bereitschaft der Basisstation (20) für einen Ad-hoc-Anmeldevorgang des Mobilteils bei der Basisstation (20) aufweist, mit folgenden Merkmalen:
einem Sender (21), der ausgebildet ist, um eine Nachricht des Kommunikationsprotokolls an ein Mobilteil zu senden;
einer Einrichtung (22) zum Erzeugen der Nachricht, basierend auf dem Kommunikationsprotokoll, wobei die Einrichtung (22) zum Erzeugen ausgebildet ist, als Nachricht die erste oder die zweite Nachricht zu erzeugen, wobei die erste Nachricht und die zweite Nachricht unterschiedlich voneinander sind; und
einen Prozessor (23), der ausgebildet ist, um dann, wenn die Basisstation (20) in einer Ad-hoc-Anmeldevorgangsbereitschaft ist und von dem Mobilteil eine Ad-hoc-Anmelde-Vorgangsanforderung erhält, einen Ad-hoc-Anmeldevorgang mit dem Mobilteil durchzuführen;
einem ersten Speicher (24) für eine Speicherung einer Systemkonfiguration, die Normal-Anmeldeinformationen für den Normal-Anmeldevorgang umfasst, und einen von dem ersten Speicher (24) separaten zweiten Speicher (25) für eine Speicherung einer Ad-hoc-Anmeldeinformation für den Ad-hoc-Anmeldevorgang; und
eine Einrichtung (27) zum Beenden einer Ad-hoc-Anmeldung des Mobilteils, wobei die Einrichtung (27) zum Beenden ausgebildet ist, um per Befehl, aufgrund eines vorgegeben externen Ereignisses, per Zeitbegrenzung oder durch Ausschalten der Basisstation die Ad-hoc-Anmeldeinformation in dem zweiten Speicher (25) zu löschen.

9. Basisstation (20) nach Anspruch 8, bei der der zweite Speicher (25) für den Ad-hoc-Anmeldevorgang ein flüchtiger Speicher ist und der erste Speicher (24) ein nicht-flüchtiger Speicher ist.

10. Basisstation (20) nach einem der Ansprüche 8 bis 9, bei der die Einrichtung (22) zum Erzeugen ausgebildet ist, für die zweite Nachricht einen durch das Kommunikationsprotokoll definierten Escape-Code einzusetzen, wobei der Escape-Code auf eine nicht durch das Kommunikationsprotokoll definierte Anwendung hinweist.

11. Basisstation (20) nach Anspruch 10, bei der die Einrichtung (22) zum Erzeugen ausgebildet ist, dass die zweite Nachricht so erzeugt wird, dass ein dem Escape folgender Bereich eine vorgegebene eindeutige Belegung aufweist.

12. Basisstation (20) nach einem der Ansprüche 8 bis 11, bei dem der Prozessor (23) ausgebildet ist, um in den Ad-hoc-Anmeldevorgang eine gleiche Kommunikation mit dem Mobilteil zu führen, wie in dem Normal-Anmeldevorgang.

13. Basisstation (20) nach Anspruch 8, das ferner folgende Merkmale aufweist, eine Einrichtung (26) zum Versetzen der Basisstation (20) in die Ad-hoc-Anmeldevorgangsbereitschaft, wobei die Einrichtung (22) zum Erzeugen ausgelegt ist, die zweite Nachricht nur zu erzeugen, wenn sie durch die Einrichtung (26) zum Versetzen aktiviert ist und wobei ferner der Prozessor (23) nur dann einen Ad-hoc-Anmeldevorgang startet, wenn er durch die Einrichtung (26) zum Versetzen dafür aktiviert ist.

14. Basisstation (20) nach Anspruch 13, bei der die Einrichtung (26) zum Versetzen ausgebildet ist, um die Basisstation (20) periodisch oder abhängig von einem vorgegebenen externen Ereignis in die Ad-hoc-Anmeldevorgangsbereitschaft zu versetzen.

15. Verfahren zum Betreiben eines Mobilteils (10) zum Kommunizieren mit einer Basisstation gemäß eines Kommunikationsprotokolls, wobei das Kommunikationsprotokoll eine erste Nachricht für eine Signalisierung einer Bereitschaft der Basisstation für einen Normal-Anmeldevorgang des Mobilteils (10) bei der Basisstation und eine zweite Nachricht für eine Signalisierung einer Bereitschaft der Basisstation für einen Ad-hoc-Anmeldevorgang des Mobilteils (10) bei der Basisstation aufweist, um eine Anmeldung bei der Basisstation zu erreichen, mit folgenden Schritten:
Empfangen einer Nachricht des Kommunikationsprotokolls;
Interpretieren einer Nachricht, basierend auf dem Kommunikationsprotokoll um die Signalisierung der Bereitschaft der Basisstation für den Normal-Anmeldevorgang von der Signalisierung der Bereitschaft der Basisstation für einen Ad-hoc-Anmeldevorgang zu unterscheiden; Durchführen des Ad-hoc-Anmeldevorgangs, wenn die Bereitschaft der Basisstation für einen Ad-hoc-Anmeldevorgang signalisiert wird;
Speichern einer Ad-hoc-Anmeldeinformation für den Ad-hoc-Anmeldevorgang in einem von einem ersten Speicher separaten zweiten Speicher, wobei der erste Speicher eine Systemkonfiguration, die Normal-Anmeldeinformationen für den Normal-Anmeldevorgang umfasst, speichert; und
Beenden einer Ad-hoc-Anmeldung bei der Basisstation, wobei der Schritt des Beendens implementiert ist, um per Befehl, per Zeitbegrenzung oder durch Ausschalten des Mobilteils die Ad-hoc-Anmeldeinformation in dem zweiten Speicher (15) zu löschen.

16. Verfahren zum Betreiben einer Basisstation (20) zur Kommunikation mit einem Mobilteil gemäß eines Kommunikationsprotokolls, wobei das Kommunikationsprotokoll eine erste Nachricht für eine Signalisierung einer Bereitschaft der Basisstation (20) für einen Normal-Anmeldevorgang des Mobilteils bei der Basisstation (20) und eine zweite Nachricht für eine Signalisierung einer Bereitschaft der Basisstation (20) für einen Ad-hoc-Anmeldevorgang des Mobilteils bei der Basisstation (20) aufweist, um eine Anmeldung bei der Basisstation (20) zu erreichen, mit folgenden Schritten:
Erzeugen entweder der ersten oder zweiten Nachricht, wobei die erste und die zweite Nachricht unterschiedlich voneinander sind;
Senden der Nachricht; und
Durchführen des Ad-hoc-Anmeldevorgangs, wenn die Basisstation (20) in einer Ad-hoc-Anmeldevorgangsbereitschaft ist und von dem Mobilteils eine Ad-hoc-Anmelde-Vorgangsanforderung erhält;
Speichern einer Ad-hoc-Anmeldeinformation für den Ad-hoc-Anmeldevorgang in einem von einem ersten Speicher separaten zweiten Speicher, wobei der erste Speicher eine Systemkonfiguration, die Normal-Anmeldeinformationen für den Normal-Anmeldevorgang umfasst, speichert; und
Beenden einer Ad-hoc-Anmeldung des Mobilteils, wobei der Schritt des Beendens implementiert ist, um per Befehl, aufgrund eines vorgegeben externen Ereignisses, per Zeitbegrenzung oder durch Ausschalten der Basisstation die Ad-hoc-Anmeldeinformation in dem zweiten Speicher (25) zu löschen.

17. Computer-Programm mit einem Programm-Code zum Ausführen eines Verfahrens gemäß Anspruch 15 oder Anspruch 16, wenn das Computer-Programm auf einem Computer abläuft.

## Claims

1. Mobile device (10) for communicating with a base station according to a communication protocol, the communication protocol comprising a first message for signaling a readiness of the base station for a normal login operation of the mobile device (10) with the base station and a second message for signaling a readiness of the base station for an ad-hoc login operation of the mobile device (10) with the base station, comprising:
a receiver (11), which is formed so as to receive a message of the communication protocol from a base station;
a means (12) for interpreting the message based on the communication protocol, the means (12) for interpreting being formed so as to differentiate the signaling of the readiness of the base station for the normal login operation from the signaling of the readiness of the base station for an ad-hoc login operation; and
a processor (13), which is formed so as to perform an ad-hoc login operation with the base station when the readiness of the base station for an ad-hoc login operation is signaled;
a first memory (14) for storing a system configuration comprising normal login information for the normal login operation, and a second memory (15), separate from the first memory (14), for storing ad-hoc login information for the ad-hoc login operation; and
means (17) for terminating an ad-hoc login of the mobile device (10), the means (17) for terminating being formed so as to terminate the ad-hoc login by a command, by a time limit or by switching off the mobile device, and to delete the ad-hoc login information in the second memory (15).

2. Mobile device (10) according to claim 1, wherein the second memory (15) for the ad-hoc login operation is a volatile memory and the first memory (14) is a nonvolatile memory.

3. Mobile device (10) according to one of claims 1 to 2, wherein the means (12) for interpreting is formed so as to search, in a message received, for an escape code defined by the communication protocol, the escape code indicating an application not defined by the communication protocol.

4. Mobile device (10) according to claim 3, wherein the means (12) for interpreting is formed so as to interpret the message so that a following region of the data stream is evaluated when the escape code is recognized, and, in the event of a default occupancy of the following region, to activate the processor so that it starts the ad-hoc login operation, or to already activate the processor (13) in order to start the ad-hoc login operation when the message comprises the escape code.

5. Mobile device (10) according to one of claims 1 to 4, wherein the processor (13) is formed so as to perform, in the ad-hoc login operation, the same communication with the base station as in the normal login operation.

6. Mobile device (10) according to claim 1, further comprising a means (16) for placing the mobile device into readiness for the ad-hoc login operation, the means (12) for interpreting or the processor (13) being formed so as to be active for an ad-hoc login operation only when the means (16) for placing signals the readiness for the ad-hoc login operation.

7. Mobile device (10) according to claim 6, wherein the means (16) for placing is formed so as to place the mobile device (10), periodically or depending on an external event, into readiness for the ad-hoc login operation.

8. Base station (20) for communicating with a mobile device according to a communication protocol, the communication protocol comprising a first message for signaling a readiness of the base station for a normal login operation of the mobile device with the base station (20) and a second message for signaling a readiness of the base station (20) for an ad-hoc login operation of the mobile device with the base station (20), comprising:
a transmitter (21), which is formed so as to send a message of the communication protocol to a mobile device;
a means (22) for generating the message based on the communication protocol, the means (22) for generating being formed so as to generate, as a message, the first or the second message, the first message and the second message being different from each other; and
a processor (23), which is formed so as to perform, when the base station (20) is ready for an ad-hoc login operation and receives a request for an ad-hoc login operation from the mobile device, an ad-hoc login operation with the mobile device;
a first memory (24) for storing a system configuration comprising normal login information for the normal login operation, and a second memory (25), separate from the first memory (24), for storing ad-hoc login information for the ad-hoc login operation; and
a means (27) for terminating an ad-hoc login of the mobile device, the means (27) for terminating being formed so as to delete the ad-hoc login information in the second memory (25) by a command, due to a default external event, by a time limit or by switching off the base station.

9. Base station (20) according to claim 8, wherein the second memory (25) for the ad-hoc login operation is a volatile memory and the first memory (24) is a nonvolatile memory.

10. Base station (20) according to one of claims 8 to 9, wherein the means (22) for generating is formed so as to use, for the second message, an escape code defined by the communication protocol, the escape code indicating an application not defined by the communication protocol.

11. Base station (20) according to claim 10, wherein the means (22) for generating is formed so that the second message is generated so that a region following the escape has a default unique occupancy.

12. Base station (20) according to one of claims 8 to 11, wherein the processor (23) is formed so as to perform, in the ad-hoc login operation, the same communication with the mobile device as in the normal login operation.

13. Base station (20) according to claim 8, further comprising a means (26) for placing the base station (20) into readiness for an ad-hoc login operation, the means (22) for generating being formed so as to generate the second message only when it is activated for by the means (26) for placing, and the processor (23) further starting an ad-hoc login operation only when it is activated to this end by the means (26) for placing.

14. Base station (20) according to claim 13, wherein the means (26) for placing is formed so as to place the base station (20), periodically or depending on a default external event, into readiness for the ad-hoc login operation.

15. Method for operating a mobile device (10) for communicating with a base station according to a communication protocol, the communication protocol comprising a first message for signaling a readiness of the base station for a normal login operation of the mobile device (10) with the base station and a second message for signaling a readiness of the base station for an ad-hoc login operation of the mobile device (10) with the base station, in order to achieve a login with the base station, comprising:
receiving a message of the communication protocol;
interpreting a message based on the communication protocol, in order to differentiate the signaling of the readiness of the base station for the normal login operation from the signaling of the readiness of the base station for an ad-hoc login operation; and
performing the ad-hoc login operation when the readiness of the base station for an ad-hoc login operation is signaled;
storing ad-hoc login information for the ad-hoc login operation in a second memory separate from the first memory, the first memory storing a system configuration comprising normal login information for the normal login operation; and
terminating an ad-hoc login of the base station, the step of terminating being implemented so as to delete the ad-hoc login information in the second memory (15) by a command, by a time limit or by switching off the mobile device.

16. Method for operating a base station (20) for communication with a mobile device according to a communication protocol, the communication protocol comprising a first message for signaling a readiness of the base station (20) for a normal login operation of the mobile device with the base station (20) and a second message for signaling a readiness of the base station (20) for an ad-hoc login operation of the mobile device with the base station (20), in order to achieve a login with the base station (20), comprising:
generating either the first or the second message, the first and the second message being different from each other;
sending the message; and
performing the ad-hoc login operation when the base station (20) is ready for an ad-hoc login operation and receives a request for an ad-hoc login operation from the mobile device;
storing ad-hoc login information for the ad-hoc login operation in a second memory separate from the first memory, the first memory storing a system configuration comprising normal login information for the normal login operation; and
terminating an ad-hoc login of the mobile device, the step of terminating being implemented so as to delete the ad-hoc login information in the second memory (25) by a command, due to a default external event, by a time limit or by switching off the base station.

17. Computer program with a program code for performing a method according to claim 15 or claim 16 when the computer program is executed on a computer.

## Revendications

1. Station mobile (10) destinée à communiquer avec une station de base selon un protocole de communication, le protocole de communication présentant un premier message pour signaler une disponibilité de la station de base pour une opération d'ouverture de session normale de la station mobile (10) à la station de base et un deuxième message pour signaler une disponibilité de la station de base pour une opération d'ouverture de session ad hoc de la station mobile (10) à la station de base, aux caractéristiques suivantes:
un récepteur (11) qui est réalisé de manière à recevoir un message du protocole de communication d'une station de base;
un moyen (12) destiné à interpréter le message sur base du protocole de communication, le moyen (12) destiné à interpréter étant réalisé de manière à distinguer le signalement de la disponibilité de la station de base pour l'opération d'ouverture de session normale du signalement de la disponibilité de la station de base pour une opération d'ouverture de session ad hoc;
un processeur (13) qui est réalisé de manière à effectuer, lorsqu'est signalée la disponibilité de la station de base pour une opération d'ouverture de session ad hoc, une opération d'ouverture de session ad hoc avec la station de base;
une première mémoire (14) destinée à mémoriser une configuration de système qui comprend des informations d'ouverture de session normale pour l'opération d'ouverture de session normale, et une deuxième mémoire (15), séparée de la première mémoire (14), destinée à mémoriser une information d'ouverture de session ad hoc pour l'opération d'ouverture de session ad hoc; et
un moyen (17) destiné à terminer une ouverture de session ad hoc de la station mobile (10), le moyen (17) destiné à terminer étant réalisé de manière à terminer, par ordre, par limitation de temps ou par déconnexion de la station mobile, l'ouverture de session ad hoc et à effacer l'information d'ouverture de session ad hoc dans la deuxième mémoire (15).

2. Station mobile (10) selon la revendication 1, dans laquelle la deuxième mémoire (15) pour l'opération d'ouverture de session ad hoc est une mémoire volatile et la première mémoire (14) est une mémoire non volatile.

3. Station mobile (10) selon l'une des revendications 1 à 2, dans laquelle le moyen (12) destiné à interpréter est réalisé de manière à chercher, dans un message reçu, un code Escape (= d'échappement) défini par le protocole de communication, le code Escape indiquant une application non définie par le protocole de communication.

4. Station mobile (10) selon la revendication 3, dans lequel le moyen (12) destiné à interpréter est réalisé de manière à interpréter le message de sorte que, en cas d'identification du code Escape, il est évalué une zone suivante du flux de données, et à activer, en cas d'occupation prédéterminée de la zone suivante, le processeur, de sorte qu'il commence l'opération d'ouverture de session ad hoc, ou à déjà activer le processeur (13) pour commencer l'opération d'ouverture de session ad hoc lorsque le message présente le code Escape.

5. Station mobile (10) selon l'une des revendications 1 à 4, dans laquelle le processeur (13) est réalisé de manière à réaliser, dans l'opération d'ouverture de session ad hoc, une communication avec la station de base identique à celle dans l'opération d'ouverture de session normale.

6. Station mobile (10) selon la revendication 1, qui présente par ailleurs les caractéristiques suivantes, un moyen (16) destiné à amener la station mobile à la disponibilité pour l'opération d'ouverture de session ad hoc, le moyen (12) destiné à interpréter ou le processeur (13) étant réalisés de manière à n'être actifs pour une opération d'ouverture de session ad hoc que lorsque le dispositif (16) destiné à amener signale la disponibilité pour l'opération d'ouverture de session ad hoc.

7. Station mobile (10) selon la revendication 6, dans laquelle le moyen (16) destiné à amener est réalisé de manière à amener la station mobile (10), périodiquement ou en fonction d'un événement externe, en disponibilité pour l'opération d'ouverture de session ad hoc.

8. Station de base (20) destinée à communiquer avec une station mobile selon un protocole de communication, le protocole de communication présentant un premier message pour signaler une disponibilité de la station de base pour une opération d'ouverture de session normale de la station mobile à la station de base (20) et un deuxième message pour signaler une disponibilité de la station de base (20) pour une opération d'ouverture de session ad hoc de la station mobile à la station de base (20), aux caractéristiques suivantes:
un émetteur (21) qui est réalisé de manière à envoyer un message du protocole de communication à une station mobile;
un moyen (22) destiné à générer le message sur base du protocole de communication, le moyen (22) destiné à générer étant réalisé de manière générer, comme message, le premier ou le deuxième message, le premier message et le deuxième message étant différents l'un de l'autre; et
un processeur (23) qui est réalisé de manière à réaliser, lorsque la station de base (20) est en disponibilité pour une opération d'ouverture de session ad hoc et reçoit de la station mobile une demande d'opération d'ouverture de session ad hoc, une opération d'ouverture de session ad hoc avec la station mobile;
une première mémoire (24) destinée à mémoriser une configuration de système qui comporte des informations d'ouverture de session normale pour l'opération d'ouverture de session normale, et une deuxième mémoire (25), séparée de la première mémoire (24), destinée à mémoriser une information d'ouverture de session ad hoc pour l'opération d'ouverture de session ad hoc; et
un moyen (27) destiné à terminer une ouverture de session ad hoc de la station mobile, le moyen (27) destiné à terminer étant réalisé de manière à effacer, par ordre, par suite d'un événement externe prédéterminé, par limitation de temps ou par déconnexion de la station de base, l'information d'ouverture de session ad hoc dans la deuxième mémoire (25).

9. Station de base (20) selon la revendication 8, dans laquelle la deuxième mémoire (25) pour l'opération d'ouverture de session ad hoc est une mémoire volatile et la première mémoire (24) est une mémoire non volatile.

10. Station de base (20) selon l'une des revendications 8 à 9, dans laquelle le moyen (22) destiné à générer est réalisé de manière à utiliser, pour le deuxième message, un code Escape défini par le protocole de communication, le code Escape indiquant une application non définie par le protocole de communication.

11. Station de base (20) selon la revendication 10, dans lequel le moyen (22) destiné à générer est réalisé de sorte que le deuxième message soit généré de sorte qu'une zone suivant l'Escape présente une occupation univoque prédéterminée.

12. Station de base (20) selon l'une des revendications 8 à 11, dans laquelle le processeur (23) est réalisé de manière à réaliser, dans l'opération d'ouverture de session ad hoc, une communication avec la station mobile identique à celle dans l'opération d'ouverture de session normale.

13. Station de base (20) selon la revendication 8, qui présente par ailleurs les caractéristiques suivantes, un moyen (26) destiné à amener la station de base (20) en disponibilité pour l'opération d'ouverture de session ad hoc, le moyen (22) destiné à générer étant réalisé de manière à ne générer le deuxième message que lorsqu'il est activé par le moyen (26) destiné à amener et par ailleurs le processeur (23) ne commençant une opération d'ouverture de session ad hoc que lorsqu'il est activé à cet effet par le moyen (26) destiné à amener.

14. Station de base (20) selon la revendication 13, dans laquelle le moyen (26) destiné à amener est réalisé de manière à amener la station de base (20), périodiquement ou en fonction d'un événement externe prédéterminé, en disponibilité pour l'opération d'ouverture de session ad hoc.

15. Procédé pour faire fonctionner une station mobile (10) pour communiquer avec une station de base selon un protocole de communication, le protocole de communication présentant un premier message pour signaler une disponibilité de la station de base pour une opération d'ouverture de session normale de la station mobile (10) à la station de base et un deuxième message pour signaler une disponibilité de la station de base pour une opération d'ouverture de session ad hoc de la station mobile (10) à la station de base, pour obtenir une ouverture de session à la station de base, aux étapes suivantes consistant à:
recevoir un message du protocole de communication;
interpréter un message sur base du protocole de communication, pour distinguer le signalement de la disponibilité de la station de base pour l'opération d'ouverture de session normale du signalement de la disponibilité de la station de base pour une opération d'ouverture de session ad hoc;
effectuer l'opération d'ouverture de session ad hoc lorsqu'est signalée la disponibilité de la station de base pour une opération d'ouverture de session ad hoc;
mémoriser une information d'ouverture de session ad hoc pour l'opération d'ouverture de session ad hoc dans une deuxième mémoire séparée d'une première mémoire, la première mémoire mémorisant une configuration de système qui comporte des informations d'ouverture de session normale pour l'opération d'ouverture de session normale; et
terminer une ouverture de session ad hoc à la station de base, l'étape consistant à terminer étant mise en oeuvre de manière à effacer, par ordre, par limitation de temps ou par déconnexion de la station mobile, l'information d'ouverture de session ad hoc dans la deuxième mémoire (15).

16. Procédé pour faire fonctionner une station de base (20) pour communiquer avec une station mobile selon un protocole de communication, le protocole de communication présentant un premier message pour signaler une disponibilité de la station de base (20) pour une opération d'ouverture de session normale de la station mobile à la station de base (20) et un deuxième message pour signaler une disponibilité de la station de base (20) pour une opération d'ouverture de session ad hoc de la station mobile à la station de base (20), pour obtenir une ouverture de session à la station de base (20), aux étapes suivantes consistant à:
générer soit le premier, soit le deuxième message, le premier et le deuxième message étant différents l'un de l'autre;
envoyer un message; et
réaliser l'opération d'ouverture de session ad hoc lorsque la station de base (20) est en disponibilité pour une opération d'ouverture de session ad hoc et obtient de la station mobile une demande d'opération d'ouverture de session ad hoc;
mémoriser une information d'ouverture de session ad hoc pour l'opération d'ouverture de session ad hoc dans une deuxième mémoire séparée d'une première mémoire, la première mémoire mémorisant une configuration de système qui comporte des informations d'ouverture de session normale pour l'opération d'ouverture de session normale; et
terminer une ouverture de session ad hoc de la station mobile, l'étape consistant à terminer étant mise en oeuvre pour effacer, par ordre, par suite d'un événement externe prédéterminé, par limitation de temps ou par déconnexion de la station de base, l'information d'ouverture de session ad hoc dans la deuxième mémoire (25).

17. Programme d'ordinateur avec un code de programme pour réaliser un procédé selon la revendication 15 ou la revendication 16 lorsque le programme d'ordinateur est exécuté sur un ordinateur.
